# EUROPÄISCHE PATENTSCHRIFT

(11) **EP 3 345 283 B1**
(45) Veröffentlichungstag und Bekanntmachung des Hinweises auf die Patenterteilung: **04.03.2020**
(21) Anmeldenummer: 16750154.3
(22) Anmeldetag: 04.08.2016
(51) Int. Cl.: H02K 11/33, H02K 5/10, H02K 7/14

(54) **ROTOR FÜR EINEN ELEKTROMOTOR EINES ELEKTRISCHEN VERDICHTERS**
ROTOR FOR AN ELECTRIC MOTOR OF AN ELECTRIC COMPRESSOR
ROTOR POUR MOTEUR ÉLECTRIQUE D'UN COMPRESSEUR ÉLECTRIQUE

(30) Priorität: 04.09.2015 DE 102015114868; 27.01.2016 DE 102016101437
(43) Veröffentlichungstag der Anmeldung: 11.07.2018
(73) Patentinhaber: Pierburg GmbH, 41460 Neuss (DE)
(72) Erfinder: DEWENTER, Stefan, 50733 Köln (DE); REHE, Markus, 41464 Neuss (DE)
(74) Vertreter: terpatent Patentanwälte ter Smitten Eberlein-Van Hoof Rütten Daubert
(86) Internationale Anmeldenummer: PCT/EP2016/068623
(87) Internationale Veröffentlichungsnummer: WO 2017/036727

(56) Entgegenhaltungen:
- CN-U- 204 145 122
- DE-A1-102006 049 866
- JP-A- H04 172 936
- JP-A- H08 251 850
- US-A1- 2010 117 473

## Beschreibung

Die Erfindung betrifft einen Rotor für einen Elektromotor eines elektrischen Verdichters mit einer Antriebswelle und einem oder mehreren axial hintereinander angeordneten Magnetringen, welche direkt auf die Antriebswelle aufgeklebt sind.

Rotoren von Elektromotoren werden üblicherweise durch Blechpakete gebildet, in denen Öffnungen zur Aufnahme von Permanentmagneten ausgebildet sind. Zusätzlich sind einstückige Rotoren mit Aufnahmeöffnungen für die Magnete bekannt. Bei einer Verwendung dieser Elektromotoren als Antrieb für elektrische Verdichter, die in modernen Verbrennungsmotoren eingesetzt werden, um beispielsweise bei plötzlicher Laststeigerungsanforderung kurzfristig aktiv einen ausreichenden Ladedruck zur Verfügung stellen zu können, ist es erforderlich, dass der Rotor und damit das Laufrad eines derartig genutzten Verdichters in zum Beispiel weniger als 0,3 Sekunden auf Drehzahlen von über 65.000 U/min beschleunigt wird. Um dies zu erreichen, ist es notwendig, möglichst klein bauende zu beschleunigende Rotoren zu verwenden, da diese ein geringeres Massenträgheitsmoment aufweisen.

Aus diesem Grund sind Elektromotoren bekannt geworden, die keine Blechpakete oder andere Magnetträger mehr aufweisen, sondern bei denen die Magnete direkt auf der Antriebswelle des Elektromotors befestigt werden.

Ein derartiger Elektromotor wird beispielsweise in der US 4,678,954 B offenbart. Bei diesem Elektromotor sind auf einer abgestuften Antriebswelle auf ihrem größten Umfang mehrere Magnetsegmente axial hintereinander aufgeklebt. Die Magnete weisen zueinander einen Abstand auf, um Wärmedehnungen ausgleichen zu können. Über den Umfang verteilt werden mehrere Magnetsegmente angeordnet.

Des Weiteren ist aus der CN 204145122 U ein Rotor bekannt, bei dem ein Magnetring auf eine Welle geklebt wird, wobei in die Welle kleine Nuten zum Auffangen von Kleber, der beim Aufschieben verschoben wird, eingearbeitet sind. Diese können in Umfangsrichtung, axial oder mit wechselnder Richtung ausgebildet sein.

Zusätzlich ist aus der JP 08251850 ein Rotor mit einem aufgeklebten Magnetring bekannt, bei dem eine dicke Klebeschicht zwischen Magnet und Welle vorhanden ist. Dennoch sind in der Welle zwei dünne umlaufende Axialnuten ausgebildet, die ebenfalls Kleber aufnehmen. Durch die Nuten soll ein Herunterlaufen überflüssigen Klebers vermieden werden.

Auch ist aus der JP 04-172936 A ein Elektromotor mit einem Rotor bekannt, bei dem Magnetringe auf die Antriebswelle geklebt werden. Dabei sind an der Antriebswelle in dem Bereich zwischen den Magnetringen Nuten ausgebildet, die mit dem Kleber gefüllt sind.

Diese Elektromotoren haben jedoch den Nachteil, dass die Haltbarkeit der Klebung nicht immer gegeben ist. Insbesondere bei der Verwendung als Antrieb für elektrische Verdichter und den dabei auftretenden hohen Drehzahlen und daraus folgenden hohen Zentrifugalkräften ist ein Lösen der Klebung zu befürchten.

Es stellt sich daher die Aufgabe, einen Rotor für einen Elektromotor eines elektrischen Verdichter einer verbrennungskraftmaschine zur Verfügung zu stellen, der in kürzester Zeit auf hohe Drehzahlen beschleunigt werden kann, ohne dass ein Lösen der Permanentmagnete zu befürchten ist. Unwuchten am Rotor durch die Montage sollen vermieden und zusätzlich soll die Montage vereinfacht werden.

Diese Aufgabe wird durch einen Rotor für einen Elektromotor eines elektrischen Verdichters mit den Merkmalen des Hauptanspruchs 1 gelöst.

Dadurch, dass an der Antriebswelle eine zur Anzahl der Magnetringe korrespondierende Anzahl axial hintereinander angeordneter und voneinander beabstandeter Radialnuten ausgebildet sind, die mit Kleber gefüllt sind und deren Breite kleiner ist als die Breite der Magnetringe, so dass die Magnetringe mit ihren axialen Enden direkt auf der Antriebswelle aufliegen, wobei jeder Magnetring aus zumindest zwei ringsegmentförmigen Magnetelementen zusammengesetzt ist, wird innerhalb der Radialnuten ein Reservoir für den Kleber geschaffen, so dass beim Aufschieben der Magnetringe über die Antriebswelle der Kleber nicht vollständig aus den Klebebereichen geschoben wird. Dies verstärkt die Klebekraft deutlich. Dennoch können die Magnetringe mit einem Innendurchmesser hergestellt werden, der dem Außendurchmesser der Antriebswelle entspricht, so dass durch die Auflage der axialen Enden des Magnetrings eine Unwucht, die sonst durch ungleichmäßige Klebeschichten entstehen könnte, zuverlässig vermieden wird. Eine zusätzliche Ausbildung eines Rotorpakets, in dem die Magneten positioniert werden müssen, entfällt. Auch wird das spielfreie Anliegen der Magnetsegmente am Rotor sichergestellt, da die Segmente auf den rechteckigen Stirnflächen zueinander mit minimalem Spalt ausgeführt werden und im Klebeprozess radial auf die Welle gepresst werden. Des Weiteren können die Magnetsegmente als normale zweipolige Magneten ausgebildet werden, die dann nach dem Zusammenbau den diametral magnetisierten Magnetring bilden.

Vorzugsweise sind die Radialnuten vollumfänglich um die Antriebswelle verlaufend ausgebildet, wodurch eine großflächige und lang haltbare Klebung erreicht wird, die auch großen Zentrifugalkräften standhält.

Der Rotor ist vorteilhaft zweipolig ausgeführt und die Magnetringe sind diametral magnetisiert. Hierdurch wird die Grundfrequenz des Elektromotors reduziert. Die resultierende niedrige elektrische Frequenz vereinfacht zusätzlich die Elektronik zur Ansteuerung des Elektromotors.

Eine besonders einfache Montage ergibt sich, wenn jeder Magnetring durch zwei halbringförmige Magnetelemente gebildet ist.

Des Weiteren ist es vorteilhaft, wenn eine Bandage oder Hülse aus Glasfasern die Magnetringe radial umgibt und somit entgegen der auftretenden Zentrifugalkräfte wirkt, welche bei den schnellen Drehungen in erhöhtem Maß auftreten. Somit wird die Drehzahlfestigkeit und Stabilität des Rotors noch einmal verbessert.

In einer ergänzenden bevorzugten Ausbildung ist der Rotor an seinen axialen Enden durch jeweils eine Platte begrenzt, über die das gesamte Paket zusätzlich axial positioniert, fixiert und gewuchtet werden kann.

Vorzugsweise weist die Antriebswelle zwischen ihren Lagerstellen einen im Wesentlichen konstanten Durchmesser auf. Durch das Anbringen der Magnete direkt auf dem geringen Durchmesser der im Wesentlichen nicht abgestuften Antriebswelle wird ein Rotor mit sehr kleinem Trägheitsmoment geschaffen, der entsprechend schnell beschleunigt werden kann.

In einer hierzu weiterführenden Ausbildung der Erfindung ist der konstante Durchmesser der Antriebswelle zwischen den Lagerstellen lediglich durch die Radialnuten und einen Absatz unterbrochen, gegen den die erste Platte anliegt, gegen welche die Magnetringe anliegen. Auf diese Weise wird die Axiallage der Magnete und somit deren Position zu den Radialnuten festgelegt. Fehler bei der Montage, die zu Unwuchten oder einer schlechten Haltbarkeit der Klebung führen würden, werden hierdurch ausgeschlossen.

Es wird somit ein Rotor für einen Elektromotor eines elektrischen Verdichters einer Verbrennungskraftmaschine geschaffen, bei dem durch ein sehr geringes Trägheitsmoment sehr große Beschleunigungen zu erreichen sind. Trotz der bei diesen Beschleunigungen auftretenden Kräfte weist die Verbindung zwischen der Antriebswelle und den Magneten eine sehr gute Haltbarkeit auf, ohne dass hierfür zusätzliche Bauteile zur Befestigung der Magneten erforderlich wären. Diese Haltbarkeit wird durch zusätzliche Maßnahmen noch verstärkt. Unwuchten des Rotors, die ausgeglichen werden müssen, entfallen weitestgehend und Fehler bei der Montage oder ungleichmäßige Klebeschichten werden vermieden.

Ein Ausführungsbeispiel eines erfindungsgemäßen Rotors für einen Elektromotor eines elektrischen Verdichters ist in den Figuren dargestellt und wird nachfolgend beschrieben.

Die Figur 1 zeigt eine Seitenansicht eines erfindungsgemäßen Rotors für einen Elektromotor eines elektrischen Verdichters in geschnittener Darstellung.

Die Figur 2 zeigt eine Schnittansicht des erfindungsgemäßen Rotors aus Figur 1 in axialer Richtung.

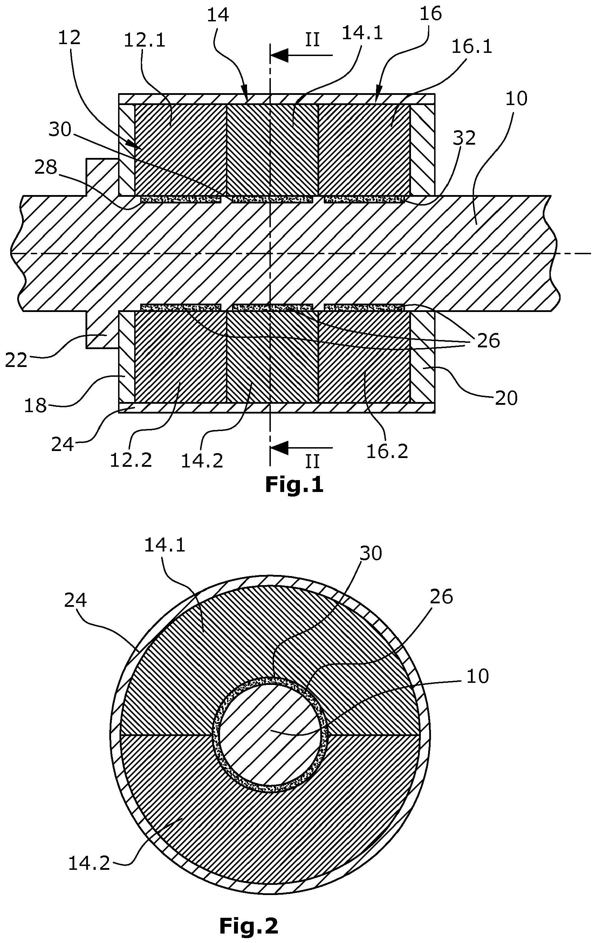

Der in den Figuren dargestellte erfindungsgemäße Rotor eines Elektromotors besteht aus einer im Gehäuse des Elektromotors gelagerten Antriebswelle 10, deren Bereich zwischen den Lagerstellen der Antriebswelle 10 in der Figur 1 dargestellt ist, sowie aus auf der Antriebswelle 10 befestigten Magnetringen 12, 14, 16 und ist innerhalb eines nicht dargestellten Stators mit Statorwicklungen in bekannter Weise angeordnet.

Der Rotor ist zweipolig ausgeführt und weist im vorliegenden Ausführungsbeispiel insgesamt sechs halbringförmigen Magnetelemente 12.1, 12.2, 14.1, 14.2, 16.1, 16.2 auf, die an den Magnetenden ihre entgegengesetzten Pole aufweisen und wovon jeweils zwei gegenüberliegend zueinander auf die Antriebswelle 10 geklebt werden und nach ihrer Montage drei diametral magnetisierte Magnetringe 12, 14, 16 bilden, welche axial hintereinander auf der Antriebswelle 10 angeordnet sind.

Während der mittlere Magnetring 14 axial gegen die benachbarten Magnetringe 12, 16 anliegt, liegen diese beiden Magnetringe 12, 16 mit ihren vom mittleren Magnetring 14 weg weisenden axialen Ende gegen jeweils eine Platte 18, 20 an. Die Platten 18, 20 sind ringförmig ausgebildet und weisen eine innere Öffnung auf, deren Durchmesser im Wesentlichen dem Durchmesser der Antriebswelle 10 entspricht und deren Außendurchmesser im Wesentlichen dem Außendurchmesser der Magnetringe 12, 14, 16 entspricht. Die erste Platte 18 wird bei der Montage zur Festlegung der axialen Position des Rotors auf die Antriebswelle 10 und gegen einen ringförmigen Absatz 22 der Antriebswelle 10 geschoben, der einen im Vergleich zur übrigen Antriebswelle 10 vergrößerten Durchmesser aufweist. Nach dem Befestigen der drei axial aufeinander folgenden Magnetringe 12, 14, 16 wird dann auf die Antriebswelle 10 die zweite Platte 20 gegen den letzten Magnetring 16 geschoben.

Die beiden Platten 18, 20 sowie die Magnetringe 12, 14, 16 sind vollumfänglich von einer gewickelten Bandage 24 aus Glasfasern umgeben, durch die eine Stabilisierung der Position der Magnetringe 12, 14, 16 und der Platten 18, 20 zueinander erfolgt.

Die Befestigung der Magnetringe 12, 14, 16 auf der Antriebswelle 10 erfolgt erfindungsgemäß mittels eines Klebers 26, der in an der Antriebswelle 10 ausgebildeten sich vollumfänglich um die Antriebswelle 10 erstreckenden Radialnuten 28, 30, 32 angeordnet ist. Diese Radialnuten 28, 30, 32 sind derart zum Absatz 22 positioniert, dass sie jeweils unterhalb eines axial mittleren Abschnitts jedes Magnetringes 12, 14, 16 angeordnet sind und die axialen Enden des jeweiligen Magnetringes 12, 14, 16 auf der Antriebswelle 10 selbst zwischen den Radialnuten 28, 30, 32 aufliegen. Dies bedeutet beispielsweise, dass für einen Magnetring 12, 14, 16 mit einer Breite von etwa 10mm jede Radialnut 28, 30, 32 etwa 7,5mm breit ausgeführt wird, so dass der Magnetring 12, 14, 16 beidseitig auf einer Breite von etwa 1,25mm unmittelbar auf der Antriebswelle 10 aufliegt. Entsprechend ergibt sich ein Abstand von 2,5mm zwischen den Radialnuten 28, 30, 32. Die Tiefe der Radialnuten beträgt etwa 0,1mm, was ausreichend ist, um genug Kleber 26 aufzunehmen.

Im vorliegenden Ausführungsbeispiel können die halbringförmigen Magnetelemente 12.1, 12.2, 14.1, 14.2, 16.1, 16.2 aus radialer Richtung aufgesetzt werden, wobei durch die Radialnuten 28, 30, 32 vermieden wird, dass Klebstoff in radialer Richtung zwischen die Magnetelemente und von der Antriebswelle 10 geschoben wird. Somit wird eine großflächige Klebung auf der Antriebswelle 10 gewährleistet.

Auch bei der Verwendung von geschlossenen Magnetringen 12, 14, 16, welche axial auf die Antriebswelle 10 aufgeschoben werden, wird durch die Radialnuten 28, 30, 32 vermieden, dass Klebstoff in axialer Richtung entlang der Antriebswelle 10 geschoben wird, so dass auch bei dieser Ausführung eine großflächige Klebung gewährleistet wird.

Es wird somit ein Rotor für einen Elektromotor geschaffen, bei dem eine großflächige Klebung mit ausreichend Kleber sichergestellt wird, so dass trotz hoher auftretender Zentrifugalkräfte die Befestigung der Magnete ohne zusätzliche Bauteile erfolgen kann und der Rotor dennoch eine hohe Drehzahlfestigkeit aufweist. Da der Rotor neben den Magneten über keine größeren Massen verfügt, die beschleunigt werden müssen, sind die Trägheitskräfte minimiert, was einen schnellen Hochlauf des Elektromotors ermöglicht, denn der Durchmesser der Antriebswelle ist zwischen den Lagerstellen mit Ausnahme des Anschlags und der Nuten kostant. Dabei werden Unwuchten des Rotors durch die Auflage der Magnetringe mit ihren axialen Enden direkt auf der Antriebswelle verhindert.

Es sollte deutlich sein, dass verschiedene konstruktive Varianten im Vergleich zum beschriebenen Ausführungsbeispiel innerhalb des Schutzbereiches des Hauptanspruchs möglich sind. So können auch vollumfängliche Magnetringe, oder kleiner segmentierte teilringförmige Magnetelemente verwendet werden. Auch ist es möglich, nur zwei oder mehr Magnetringe hintereinander anzuordnen. Die Bandage kann als Faserband auf den Rotor aufgewickelt, wobei als Grundträgermaterial beispielswiese GFK- oder CFK-Fasern verwendet werden können, die mit unterschiedlichen Kunststoffkomponenten als Bindemittel gepaart werden. Die Bandage kann auch als feste Hülse ausgeführt werden oder gegebenenfalls ebenso wie die Platten am axialen Ende vollständig entfallen, ohne den Schutzbereich des Hauptanspruchs zu verlassen.

## Patentansprüche

1. Rotor für einen Elektromotor eines elektrischen Verdichters mit einer Antriebswelle (10), und einem oder mehreren axial hintereinander angeordneten Magnetringen (12, 14, 16), welche direkt auf die Antriebswelle (10) aufgeklebt sind, wobei an der Antriebswelle (10) eine zur Anzahl der Magnetringe (12, 14, 16) korrespondierende Anzahl axial hintereinander angeordneter und voneinander beabstandeter Radialnuten (28, 30, 32) ausgebildet sind, die mit Kleber (26) gefüllt sind und deren Breite kleiner ist als die Breite der Magnetringe (12, 14, 16), so dass die Magnetringe (12, 14, 16) mit ihren axialen Enden direkt auf der Antriebswelle (10) aufliegen, wobei jeder Magnetring (12, 14, 16) aus zumindest zwei ringsegmentförmigen Magnetelementen (12.1, 12.2, 14.1, 14.2, 16.1, 16.2) zusammengesetzt ist.

2. Rotor für einen Elektromotor eines elektrischen Verdichters nach Anspruch 1,
**dadurch gekennzeichnet, dass**
die Radialnuten (28, 30, 32) vollumfänglich um die Antriebswelle (10) verlaufend ausgebildet sind.

3. Rotor für einen Elektromotor eines elektrischen Verdichters nach einem der Ansprüche 1 oder 2,
**dadurch gekennzeichnet, dass**
der Rotor zweipolig ausgeführt ist.

4. Rotor für einen Elektromotor eines elektrischen Verdichters nach einem der vorhergehenden Ansprüche,
**dadurch gekennzeichnet, dass**
die Magnetringe (12, 14, 16) diametral magnetisiert sind.

5. Rotor für einen Elektromotor eines elektrischen Verdichters nach einem der vorhergehenden Ansprüche,
**dadurch gekennzeichnet, dass**
jeder Magnetring (12, 14, 16) durch zwei halbringförmige Magnetelemente (12.1, 12.2, 14.1, 14.2, 16.1, 16.2) gebildet ist.

6. Rotor für einen Elektromotor eines elektrischen Verdichters nach einem der vorhergehenden Ansprüche,
**dadurch gekennzeichnet, dass**
eine Bandage (24) oder Hülse aus Glasfasern die Magnetringe (12, 14, 16) radial umgibt.

7. Rotor für einen Elektromotor eines elektrischen Verdichters nach einem der vorhergehenden Ansprüche,
**dadurch gekennzeichnet, dass**
der Rotor an seinen axialen Enden durch jeweils eine Platte (18, 20) begrenzt ist.

8. Rotor für einen Elektromotor eines elektrischen Verdichters nach einem der vorhergehenden Ansprüche,
**dadurch gekennzeichnet, dass**
die Antriebswelle (10) zwischen den Lagerstellen der Antriebswelle (10) einen im Wesentlichen konstanten Durchmesser aufweist.

9. Rotor für einen Elektromotor eines elektrischen Verdichters nach Anspruch 8,
**dadurch gekennzeichnet, dass**
der konstante Durchmesser der Antriebswelle (10) zwischen den Lagerstellen der Antriebswelle (10) lediglich durch die Radialnuten (28, 30, 32) und einen Absatz (22) unterbrochen Ist, gegen den die erste Platte (18) anliegt, gegen welche die Magnetringe (12, 14, 16) anliegen.

## Claims

1. Rotor for an electric motor of an electric compressor comprising
a drive shaft (10), and one or more magnetic rings (12, 14, 16) arranged axially one behind the other, said rings being glued directly onto the drive shaft (10), wherein a number of radial grooves (28, 30, 32), which are arranged axially one behind the other and are spaced apart from each other, is formed on the drive shaft (10), said number corresponding to the number of the magnetic rings (12, 14, 16), said grooves being filled with adhesive (26) and their width being smaller than the width of the magnetic rings (12, 14, 16) so that the magnetic rings (12, 14, 16) are supported directly on the drive shaft (10) by their axial ends, wherein magnetic ring (12, 14, 16) is composed of at least two ring segment-shaped magnetic elements (12.1, 12.2, 14.1, 14.2, 16.1, 16.2).

2. Rotor for an electric motor of an electric compressor of claim 1, **characterized in that** the radial grooves (28, 30, 32) are designed to extend fully around the drive shaft (10).

3. Rotor for an electric motor of an electric compressor of one of claims 1 or 2, **characterized in that** the rotor is configured to have two poles.

4. Rotor for an electric motor of an electric compressor of one of the preceding claims, **characterized in that** the magnetic rings (12, 14, 16) are diametrically magnetized.

5. Rotor for an electric motor of an electric compressor of one of the preceding claims, **characterized in that** each magnetic ring (12, 14, 16) is formed by two semi-ring-shaped magnetic elements (12.1, 12.2, 14.1, 14.2, 16.1, 16.2).

6. Rotor for an electric motor of an electric compressor of one of the preceding claims, **characterized in that** a bandage (24) or sleeve of glass fibers radially surrounds the magnetic rings (12, 14, 16).

7. Rotor for an electric motor of an electric compressor of one of the preceding claims, **characterized in that** the rotor is delimited at its axial ends by a plate (18, 20), respectively.

8. Rotor for an electric motor of an electric compressor of one of the preceding claims, **characterized in that** the drive shaft (10) has a substantially constant diameter between the bearing points of the drive shaft (10).

9. Rotor for an electric motor of an electric compressor of claim 8, **characterized in that** the constant diameter of the drive shaft (10) between the bearing points of the drive shaft (10) is interrupted only by the radial grooves (28, 30, 32) and a shoulder (22) against which the first plate (18) abuts, against which plate the magnetic rings (12, 14, 16) abut.

## Revendications

1. Rotor pour un moteur électrique d'un compresseur électrique comprenant
un arbre d'entrainement (10) et un ou plusieurs anneaux magnétiques (12, 14, 16) disposés axialement l'un derrière l'autre, les anneaux étant collés directement sur l'arbre d'entrainement (10), un nombre de rainures radiales étant formé sur l'arbre d'entrainement (10), ledit nombre correspondant au nombre d'anneaux magnétiques (12, 14, 16) et les rainures étant disposées axialement l'une derrière l'autre et espacées (28, 30, 32) l'une de l'autre, lesdites rainures étant remplies d'adhésif (26) et dont la largeur est inférieure à la largeur des anneaux magnétiques (12, 14, 16) de sorte que les anneaux magnétiques (12, 14, 16) s'appuient directement sur l'arbre d'entrainement (10) par leurs extrémités axiales, chaque anneau magnétique (12, 14, 16) étant composé d'au moins deux éléments magnétiques en forme de segment d'anneau (12.1, 12.2, 14.1, 14.2, 16.1, 16.2).

2. Rotor pour un moteur électrique d'un compresseur électrique selon la revendication 1, **caractérisé en ce que** les rainures radiales (28, 30, 32) sont formées pour s'étendre complètement autour de l'arbre d'entraînement (10).

3. Rotor pour moteur électrique d'un compresseur électrique selon l'une quelconque des revendications 1 ou 2, **caractérisé en ce que** le rotor est conçu avec deux pôles.

4. Rotor pour moteur électrique d'un compresseur électrique selon l'une quelconques des revendications précédentes, **caractérisé en ce que** les anneaux magnétiques (12, 14, 16) sont magnétisés diamétralement.

5. Rotor pour moteur électrique d'un compresseur électrique selon l'une quelconques des revendications précédentes, **caractérisé en ce que** chaque anneau magnétique (12, 14, 16) est formé de deux éléments magnétiques en forme de demi-anneau (12.1, 12.2, 14.1, 14.2, 16.1, 16.2).

6. Rotor pour moteur électrique d'un compresseur électrique selon l'une quelconque des revendications précédentes, **caractérisé en ce que** les anneaux magnétiques (12, 14, 16) sont radialement entourés par un bandage (24) ou manchon en fibres de verre.

7. Rotor pour moteur électrique d'un compresseur électrique selon l'une quelconque des revendications précédentes, **caractérisé en ce que** le rotor est délimité à ses extrémités axiales par une plaque (18, 20) respective.

8. Rotor pour moteur électrique d'un compresseur électrique selon l'une quelconque des revendications précédentes, **caractérisé en ce que** l'arbre d'entrainement (10) présente un diamètre sensiblement constant entre les points d'appui de l'arbre d'entrainement (10).

9. Rotor pour un moteur électrique d'un compresseur électrique selon la revendication 8, **caractérisé en ce que** le diamètre constant de l'arbre d'entrainement (10) entre les points d'appui de l'arbre d'entrainement (10) n'est interrompu que par les rainures radiales (28, 30, 32) et un épaulement (22) sur laquelle s'appuie la première plaque (18), sur laquelle plaque s'appuient les anneaux magnétiques (12, 14, 16).
